# EUROPÄISCHE PATENTSCHRIFT

(11) **EP 2 214 864 B1**
(45) Veröffentlichungstag und Bekanntmachung des Hinweises auf die Patenterteilung: **08.02.2012**
(21) Anmeldenummer: 08853507.5
(22) Anmeldetag: 13.11.2008
(51) Int. Cl.: B24B 5/18, B24B 19/02, B24B 47/10, B24B 19/12, B24B 3/12

(54) **VERFAHREN UND VORRICHTUNG ZUM HERSTELLEN EINER ZAHNSTANGE, INSBESONDERE FÜR EIN LENKSYSTEM IN EINEM FAHRZEUG**
METHOD AND DEVICE FOR PRODUCING A GEAR RACK, PARTICULARLY FOR A STEERING SYSTEM IN A VEHICLE
PROCÉDÉ ET DISPOSITIF POUR FABRIQUER UNE CRÉMAILLÈRE, NOTAMMENT POUR UN SYSTÈME DE DIRECTION DANS UN VÉHICULE

(30) Priorität: 29.11.2007 DE 102007047891
(43) Veröffentlichungstag der Anmeldung: 11.08.2010
(73) Patentinhaber: ZF Lenksysteme GmbH, 73527 Schwäbisch Gmünd (DE)
(72) Erfinder: HAUG, Ottokar, 73550 Waldstetten (DE); MELZER, Ralf, 73563 Mögglingen (DE); GRUPP, Markus, 73072 Donzdorf (DE)
(86) Internationale Anmeldenummer: PCT/EP2008/065464
(87) Internationale Veröffentlichungsnummer: WO 2009/068441

(56) Entgegenhaltungen:
- DD-A1- 220 926
- JP-A- 7 024 720
- US-A- 5 921 850

## Beschreibung

Die Erfindung bezieht sich auf ein Verfahren und eine Vorrichtung zum Herstellen einer Zahnstange, insbesondere für ein Lenksystem in einem Fahrzeug, nach dem Oberbegriff des Anspruches 1 bzw. 4.

In der DE-PS 885 525 wird eine Vorrichtung zur Schleifbearbeitung runder Werkstücke beschrieben. Um zu vermeiden, dass sich ein Schleifmuster in das bearbeitete Werkstück einprägt, was unerwünschte Begleiterscheinungen beim Einsatz des Werkstücks zur Folge haben kann, beispielsweise eine unerwünschte Geräuschentwicklung, wird gemäß der DE-PS 885 525 das Werkstück mit einer unregelmäßigen Schleifbewegung beaufschlagt, die keine bevorzugte Schleifspur hinterlässt, sondern die gesamte zu bearbeitende Fläche gleichmäßig abschleift. Erreicht wird dies dadurch, dass die Schleifsteine, welche zur Bearbeitung des Werkstücks vorgesehen sind, während des Schleifens eine Schwingbewegung in Richtung der Längsachse des Werkstückes ausführen und dass eine die Schleifsteine aufnehmende Haltestange in Querschwingungen versetzt wird. Über diese zusätzliche Relativbewegung zwischen dem Schleifwerkzeug und dem zu bearbeitenden Werkstück wird eine Vergleichmäßigung des Schleifbildes erreicht. Voraussetzung ist aber, dass mittels einer verhältnismäßig aufwändigen Einrichtung das Schleifwerkzeug eine komplexe Bewegung ausführt, die neben der eigentlichen Schleifbewegung eine zusätzliche, oszillierende Relativbewegung zum Werkstück umfasst.

Ein vergleichbarer Grundgedanke liegt auch der DE 39 39 205 A1 zu Grunde, die ein Verfahren und eine Vorrichtung zum Schleifen von Sägen betrifft. Die Schleifräder, welche ein das Sägeblatt bildenden Metallstreifen bilden, sind auf einer Brücke montiert, welche relativ zu einem Rahmen der Vorrichtung bewegbar ist, wobei die Brücke so eingestellt ist, dass sie eine oszillierende Bewegung in einer Ebene parallel zu der Oberfläche des Metallstreifens ausführt. Auch diese Vorrichtung ist verhältnismäßig aufwändig gestaltet.

Die DD 220 926 A1offenbart ein Verfahren zum spitzenlosen Schleifen, bei dem nicht das Werkzeug oszilliert, sondern das Werkstück hin- und herbewegt wird. Dazu liegt das Werkstück mit seiner Stirnseite an einem Anschlag mit Stößel an. Der Stößel wird vor- und zurück geführt.

Zum allgemeinen Stand der Technik zur Herstellung von Zahnstangen für Fahrzeug-Lenksysteme wird auf die WO 92/10333 A1 (DE 691 29 415 T2) verwiesen, aus der es bekannt ist, eine zu bearbeitende Welle zwischen Spitzen einzuspannen und die Verzahnung auf der Welle mithilfe einer Schleifscheibe durchzuführen.

Der Erfindung liegt die Aufgabe zugrunde, eine Zahnstange zu schaffen, welche insbesondere für einen Einsatz in einem Lenksystem eines Fahrzeugs vorgesehen ist, bei der mit einfachen Maßnahmen eine gleichmäßige Oberflächenstruktur erreicht wird.

Diese Aufgabe wird bei dem erfindungsgemäßen Verfahren mit den Merkmalen des Anspruches 1 und der erfindungsgemäßen Vorrichtung mit den Merkmalen des Anspruches 4 gelöst. Die Unteransprüche geben zweckmäßige Weiterbildungen.

Bei dem erfindungsgemäßen Verfahren zur Herstellung einer Zahnstange, welche insbesondere für einen Einsatz in einem Lenksystem eines Fahrzeuges vorgesehen ist, wird über eine Schleifscheibe die Lauffläche auf die Mantelfläche der Zahnstange geschliffen. Zur Vermeidung eines ausgeprägten Schleifmusters, welches sich im Betrieb der Zahnstange störend auswirkt und beispielsweise zu einer unerwünschten Geräuschentwicklung führt, führt die Zahnstange während der Bearbeitung durch die Schleifscheibe eine axial oszillierende Bewegung durch. Im Rahmen dieser oszillierenden Bewegung wird die Zahnstange während der Durchführung des Schleifvorganges in Achsrichtung vor und zurück verstellt, so dass der Schleifbewegung diese oszillierende Bewegung überlagert wird. Allerdings ist es nicht erforderlich, die Schleifscheibe in Achsrichtung der Zahnstange zu bewegen; vielmehr wird die Zahnstange selbst in ihrer Achsrichtung vor und zurück bewegt, was sich wesentlich einfacher durchführen lässt als eine entsprechende Achsbewegung der Schleifscheibe. Die Schleifscheibe kann daher ortsfest innerhalb einer Bearbeitungsmaschine bzw. -vorrichtung angeordnet werden, so dass auch aufwändige Lager- und Verstellsysteme für die Schleifscheibe entfallen. Die Achsbewegung der Zahnstange ist dagegen mit verhältnismäßig einfachen Mitteln zu realisieren, da die Zahnstange ohnehin über ein Zuführ- und Haltevorrichtung in der Bearbeitungsposition gehalten bzw. an diese herangeführt werden muss. Durch eine einfache Modifikation dieser Halte- und Zuführvorrichtung oder eine entsprechende Ergänzungseinrichtung, beispielsweise über ein zusätzliches Verstellsystem, kann der Zahnstange die axial oszillierende Bewegung aufgezwungen werden. Dadurch wird ein vergleichmäßigtes Schleifbild auf der Zahnstange erreicht, wofür eine insgesamt vereinfachte Vorrichtung ausreicht.

Die erfindungsgemäße Vorrichtung, welche vorzugsweise zur Durchführung des Verfahrens eingesetzt wird, umfasst eine Schleifscheibe sowie eine Haltevorrichtung zur Aufnahme der zu bearbeitenden Zahnstange. Des Weiteren ist eine Verstelleinrichtung vorgesehen, die die Zahnstange mit einer axial oszillierenden Bewegung beaufschlagt.

Während der Bearbeitung führt die Zahnstange eine axial oszillierende Bewegung aus, die vorzugsweise eine Amplitude von maximal +- 1 mm, insbesondere von maximal +- 0.5 mm aufweist. Diese Amplitude ist grundsätzlich ausreichend, um ein von der Schleifscheibe erzeugtes, ausgeprägtes Schleifmuster auf der Oberfläche der Zahnstange zu vermeiden oder zumindest deutlich abzuschwächen, so dass auf der Oberfläche keine in eine bevorzugte Richtung weisende Unebenheiten existieren.

Die Verstelleinrichtung, welche der Zahnstange die axial oszillierende Bewegung aufprägt, ist vorzugsweise als passive Einrichtung ausgeführt, die kein eigenes aktives Stellglied benötigt. Die Arbeit für die axiale Oszillationsbewegung wird vielmehr, gemäß einer bevorzugten Ausführung, aus der Rotation der Zahnstange um ihre eigene Achse abgeleitet, indem die Rotationsbewegung der Zahnstange die Verstelleinrichtung zur Erzeugung der axialen Oszillationsbewegung antreibt. Hierfür ist es zweckmäßig, dass die Zahnstange mit einer Axialkraft gegen die Verstelleinrichtung beaufschlagt wird, um einen Kontakt mit der Verstelleinrichtung sicherzustellen. In einer vorteilhaften Ausführung ist vorgesehen, dass diese Axialkraft von einer Antriebseinrichtung aufgebracht wird, welche die Zahnstange in Rotation um ihre Längsachse versetzt. Somit kommt der Antriebseinrichtung eine doppelte Funktion zu: zum einen die Rotation der Zahnstange um ihre Längsache und zum anderen die axiale Kraftbeaufschlagung in Richtung auf die Verstelleinrichtung.

Erreicht wird dies dadurch, dass die Antriebseinrichtung als Antriebsscheibe ausgeführt ist, auf deren Mantelfläche die Zahnstange aufliegt, wobei durch eine Rotation der Antriebsscheibe auch die Zahnstange in Rotation versetzt wird. Durch eine geringfügig konische Ausführung der Antriebscheibe oder aber durch eine geringfügig winklige Positionierung der Antriebsscheibe bei zylindrischer Ausbildung wird die Zahnstange von der Antriebsscheibe mit einer Axialkraft in Richtung auf die Verstelleinrichtung beaufschlagt.

Die Verstelleinrichtung ist als Exzentereinrichtung mit einer exzentrisch gelagerten Exzenterscheibe ausgeführt, die der Zahnstange die axial oszillierende Bewegung aufzwingt. Gemäß einer vorteilhaften Ausführung ist die Exzenterscheibe in der Weise bezogen auf die Zahnstange ausgerichtet, dass die Drehachsen der Exzenterscheibe und der Zahnstange senkrecht zueinander stehen. Außerdem ist es vorteilhaft, die Zahnstange mit seitlichem Versatz zur Exzenterscheibe anzuordnen, um zu erreichen, dass die Rotation der Zahnstange um ihre Längsachse auch zu einer Rotation der Exzenterscheibe um deren Längsachse führt. Auf Grund des stirnseitigen Kontaktes zwischen Zahnstange und Exzenterscheibe führt die Rotation der Exzenterscheibe automatisch zu der gewünschten axialen Oszillationsbewegung der Zahnstange.

Grundsätzlich kommen aber auch andere Relativausrichtungen von den Achsen der Zahnstange und der Exzenterscheibe in Betracht. So ist es beispielsweise auch möglich, die Achsen unter einem von 90° abweichenden Winkel zueinander auszurichten.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Ansicht auf eine Vorrichtung zum Herstellen einer Zahnstange, die ohne Spitzen zwischen einer Antriebsscheibe und einer Schleifscheibe gelagert ist,
- Fig. 2: die Vorrichtung in Draufsicht, mit einer Exzentereinrichtung, gegen die die Stirnseite der Zahnstange gedrückt wird, wobei die Exzentereinrichtung der Zahnstange eine axial oszillierende Bewegung aufzwingt.

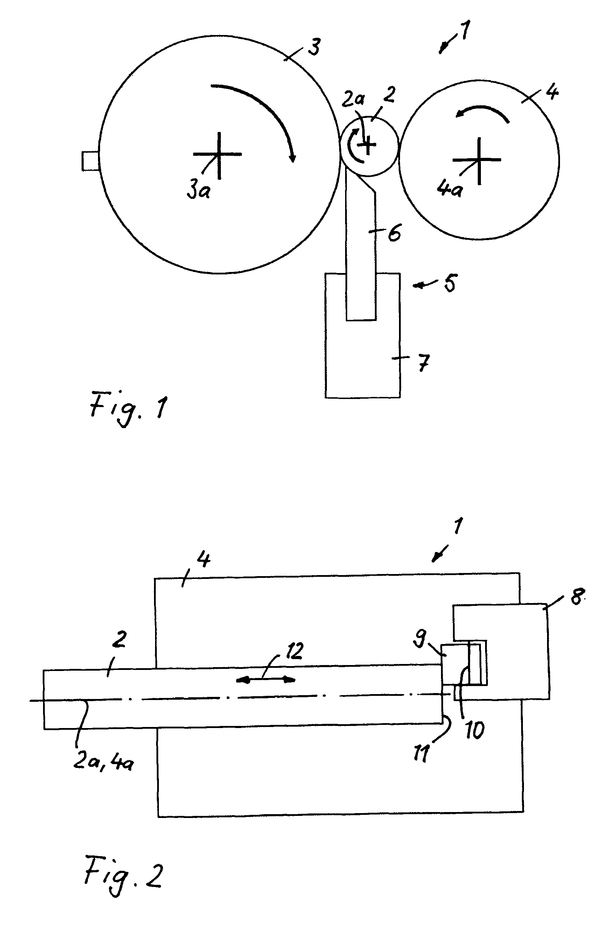

Wie Fig. 1 zu entnehmen, besteht die Schleifvorrichtung 1, welche zum Schleifen der Zahnstange 2 ausgebildet ist, aus einer Schleifscheibe 3 und einer die Zahnstange 2 erhaltenden und antreibenden Antriebsscheibe 4 sowie aus einer Haltevorrichtung 5 zum Abstützen der Zahnstange 2. Die Drehachsen 2a, 3a und 4a der Zahnstange 2, der Schleifscheibe 3 und der Antriebsscheibe 4 liegen achsparallel zueinander. In Vertikalrichtung unterscheidet sich die Positionierung der Drehachsen zueinander, wobei vorzugsweise die Drehachse 4a der Antriebsscheibe 4 tiefer liegt als die Drehachse 2a der Zahnstange 2, damit sichergestellt ist, dass die Antriebsscheibe 4 die Zahnstange 2 abstützen kann. Auch die Drehachse 3a der Schleifscheibe 3 befindet sich in einer tieferen Position als die Drehachse 2a der Zahnstange 2. Die Drehachse 4a der Antriebsscheibe 4 liegt noch etwas tiefer als die Drehachse 3a der Schleifscheibe 3.

Die Haltevorrichtung 5 für die Abstützung der Zahnstange 2 umfasst einen Haltestempel 6, der von einem Basisteil 7 getragen ist. Der Haltestempel 6 ist in der Weise ausgebildet und liegt so an der Zahnstange 2 an, dass die Rotation der Zahnstange um die eigene Längsachse nicht beeinträchtigt wird. Vorteilhafterweise ist die die Zahnstange 2 berührende Stirnseite des Haltestempels 6 spitz zulaufend ausgebildet und liegt so an der Zahnstange an, dass diese durch ihr Eigengewicht gegen die Antriebsscheibe 4 gedrückt wird.

Es kann zweckmäßig sein, die Antriebsscheibe 4 zumindest geringfügig konisch auszubilden, um hierdurch eine Axialkraft auf die Zahnstange 2 auszuüben. Der gleiche Effekt kann auch dadurch erreicht werden, dass die Antriebsscheibe 4 zylindrisch ausgebildet ist, jedoch die Achse 4a der Antriebsscheibe 4 gegenüber der Längsachse 2a der Zahnstange 2 um einen kleinen Winkel geneigt ist, und zwar in der Weise, dass die beiden Achsen in die Richtung aufeinander zulaufen, in die die Kraftbeaufschlagung erfolgen soll.

Die axiale Kraftbeaufschlagung hat zur Folge, dass die Zahnstange 2 gegen eine Exzenterscheibe 9 einer Exzentereinrichtung 8 (Fig. 2) gedrückt wird. Diese Exzentereinrichtung ist Bestandteil der Schleifvorrichtung 1 und ortsfest innerhalb der Schleifvorrichtung angeordnet. Es handelt sich bei der Exzentereinrichtung 8 um ein passives Bauteil, das zum Antrieb der Exzenterscheibe 9 keine eigene Energieversorgung und kein eigenes Stellglied benötigt.

Die Stirnseite 11 der Zahnstange 2 wird von der Antriebsscheibe 4 axial gegen die Exzenterscheibe 9 gedrückt. Diese weist eine Drehachse 10 auf, die exzentrisch zur Exzenterscheibe 9 gelagert und bezogen auf die Längsachse 2a der Zahnstange 2 senkrecht angeordnet ist. Innerhalb der Schleifvorrichtung 1 verläuft die Drehachse 10 der Exzenterscheibe 9 vertikal.

Die Stirnseite 11 der Zahnstange 2 liegt mit seitlichem Versatz an der Exzenterscheibe 9 an. Dies und die Tatsache der orthogonalen Anordnung der Achsen 2a und 10 von Zahnstange 2 bzw. Exzenterscheibe 9 hat zur Folge, dass die Eigenrotation der Zahnstange 2 zu einer Rotation der Exzenterscheibe 9 um ihre Drehachse 10 führt. Auf Grund der exzentrischen Lagerung der Exzenterscheibe 9 wird hierdurch aber zugleich eine axiale Oszillationsbewegung gemäß Doppelpfeil 12 der Zahnstange 2 vor und zurück entlang der Längsachse 2a der Zahnstange erreicht. Die Amplitude der axialen Oszillationsbewegung entspricht der Exzentrizität der Exzenterscheibe 9, sie liegt vorzugsweise in einem Bereich bis maximal +- 1 mm. Diese axiale Oszillationsbewegung wird während des Schleifvorganges durchgeführt, der über die Schleifscheibe 3 durchgeführt wird.

## Patentansprüche

1. Verfahren zum Herstellen einer Zahnstange, insbesondere für ein Lenksystem in einem Fahrzeug,
■ bei dem die Zahnstange (2) durch eine Antriebseinrichtung (4) zu einer Rotation um die Zahnstangenlängsachse (2a) gebracht wird,
■ wobei die Antriebseinrichtung als Antriebsscheibe (4) ausgeführt ist und wobei die Zahnstange (2) zwischen einer Schleifscheibe (3) und der Antriebsscheibe (4) angeordnet ist,
■ bei dem über die Schleifscheibe (3) eine Lauffläche auf die Zahnstange (2) geschliffen wird,
■ wobei die Zahnstange (2) während der Bearbeitung durch die Schleifscheibe (3) eine axial oszillierende Bewegung ausführt,
**dadurch gekennzeichnet**,
■ dass die Zahnstange (2) von der Antriebsscheibe (4) mit einer Axialkraft beaufschlagt wird, wodurch die Zahnstange (2) gegen eine Exzentereinrichtung (8) gedrückt wird, die der Zahnstange (2) die axial oszillierende Bewegung aufprägt und,
■ wobei die Exzentereinrichtung (8) passiv ausgeführt ist und eine exzentrisch gelagerte Exzenterscheibe (9) umfasst, gegen die die Zahnstange (2) gedrückt wird.

2. Verfahren nach Anspruch 1, **dadurch gekennzeichnet,**
**dass** die Zahnstange (2) eine axiale Bewegung von maximal +- 1 mm, insbesondere von maximal +- 0.5 mm ausführt.

3. Verfahren nach einem der Ansprüche 1 und 2, **dadurch gekennzeichnet,**
**dass** die oszillierende Bewegung der Zahnstange (2) ausschließlich in Achsrichtung ausgeführt wird.

4. Vorrichtung, insbesondere zur Durchführung des Verfahrens nach einem der Ansprüche 1 bis 3,
■ mit einer Schleifscheibe (3),
■ mit einer Haltevorrichtung (5) zur Aufnahme einer zu bearbeitenden Zahnstange (2),
■ mit einer Antriebseinrichtung (4) für die Rotation der Zahnstange (2) um die Zahnstangenlängsachse (2a), wobei die Antriebseinrichtung als Antriebsscheibe (4) ausgeführt ist, wobei die Zahnstange (2) zwischen der Schleifscheibe (3) und der Antriebsscheibe (4) angeordnet ist,
■ mit einer Verstelleinrichtung (8) zur Erzeugung einer Relativbewegung zwischen Zahnstange (2) und Schleifscheibe (3), wobei die Verstelleinrichtung (8) die Zahnstange (2) mit einer axial oszillierenden Bewegung beaufschlagt,
**dadurch gekennzeichnet**,
■ dass die Antriebsscheibe (4) geringfügig konisch ausgeführt oder geringfügig winklig positioniert ist, wodurch die Zahnstange (2) mit einer Axialkraft in Richtung auf die Verstelleinrichtung (8) beaufschlagt wird und,
■ dass die Verstelleinrichtung (8) passiv und als Exzentereinrichtung (8) mit einer exzentrisch gelagerten Exzenterscheibe (9) ausgeführt ist, die die Zahnstange (2) mit der axial oszillierenden Bewegung beaufschlagt.

5. Vorrichtung nach Anspruch 4, **dadurch gekennzeichnet,**
**dass** die Drehachsen (2a, 10) der Zahnstange (2) und der Exzenterscheibe (9) senkrecht zueinander stehen.

6. Vorrichtung nach den Ansprüchen 4 und 5, **dadurch gekennzeichnet,**
**dass** die Stirnseite (11) der Zahnstange (2) mit seitlichem Versatz an der Exzenterscheibe (9) anliegt.

## Claims

1. Method for producing a rack, in particular for a steering system in a vehicle,
■ in which method the rack (2) is set by a drive device (4) in a rotation about the rack longitudinal axis (2a),
■ the drive device being configured as a drive disc (4) and the rack (2) being arranged between a grinding disc (3) and the drive disc (4),
■ in which method a running face is ground onto the rack (2) via the grinding disc (3),
■ the rack (2) performing an axially oscillating movement during the machining by the grinding disc (3),
characterized
■ in that the rack (2) is loaded with an axial force by the drive disc (4), as a result of which the rack (2) is pressed against an eccentric device (8) which imparts the axially oscillating movement to the rack (2), and
■ the eccentric device (8) being of passive configuration and comprising an eccentrically mounted eccentric disc (9), against which the rack (2) is pressed.

2. Method according to Claim 1, **characterized in that** the rack (2) performs an axial movement of at most ± 1 mm, in particular of at most ± 0.5 mm.

3. Method according to either of Claims 1 and 2, **characterized in that** the oscillating movement of the rack (2) is configured exclusively in the axial direction.

4. Apparatus, in particular for carrying out the method according to one of Claims 1 to 3,
■ having a grinding disc (3),
■ having a holding apparatus (5) for receiving a rack (2) to be machined,
■ having a drive device (4) for the rotation of the rack (2) about the rack longitudinal axis (2a), the drive device being configured as a drive disc (4), the rack (2) being arranged between the grinding disc (3) and the drive disc (4),
■ having an adjusting device (8) for producing a relative movement between the rack (2) and the grinding disc (3), the adjusting device (8) loading the rack (2) with an axially oscillating movement,
characterized
■ in that the drive disc (4) is of slightly conical configuration or is positioned slightly at an angle, as a result of which the rack (2) is loaded with an axial force in the direction of the adjusting device (8), and
■ in that the adjusting device (8) is configured to be passive and as an eccentric device (8) with an eccentrically mounted eccentric disc (9) which loads the rack (2) with the axially oscillating movement.

5. Apparatus according to Claim 4, **characterized in that** the rotational axes (2a, 10) of the rack (2) and the eccentric disc (9) are perpendicular with respect to one another.

6. Apparatus according to Claims 4 and 5, **characterized in that** the end side (11) of the rack (2) bears against the eccentric disc (9) with lateral offset.

## Revendications

1. Procédé pour fabriquer une crémaillère, en particulier pour un système de direction dans un véhicule,
- dans lequel la crémaillère (2) est amenée en rotation autour de l'axe longitudinal (2a) de la crémaillère par un dispositif d'entraînement (4),
- le dispositif d'entraînement étant réalisé sous forme de disque d'entraînement (4) et la crémaillère (2) étant disposée entre un disque abrasif (3) et le disque d'entraînement (4),
- dans lequel une surface de roulement est meulée sur la crémaillère (2) par le biais du disque abrasif (3),
- la crémaillère (2), pendant l'usinage par le disque abrasif (3), effectuant un mouvement d'oscillation axiale,
**caractérisé en ce que**
- la crémaillère (2) est sollicitée avec une force axiale par le disque d'entraînement (4), de sorte que la crémaillère (2) soit pressée contre un dispositif excentrique (8), qui imprime à la crémaillère (2) le mouvement d'oscillation axiale, et
- le dispositif excentrique (8) étant réalisé sous forme passive et comprenant un disque d'excentrique (9) monté de manière excentrée, contre lequel est pressée la crémaillère (2).

2. Procédé selon la revendication 1, **caractérisé en ce que**
la crémaillère (2) effectue un mouvement axial de ± 1 mm au maximum, notamment de ± 0,5 mm au maximum.

3. Procédé selon l'une quelconque des revendications 1 et 2, **caractérisé en ce que** le mouvement d'oscillation de la crémaillère (2) est effectué exclusivement dans la direction axiale.

4. Dispositif, en particulier pour mettre en oeuvre le procédé selon l'une quelconque des revendications 1 à 3, comprenant
- un disque abrasif (3),
- un dispositif de retenue (5) pour recevoir une crémaillère (2) à usiner,
- un dispositif d'entraînement (4) pour la rotation de la crémaillère (2) autour de l'axe longitudinal (2a) de la crémaillère, le dispositif d'entraînement étant réalisé sous forme de disque d'entraînement (4), la crémaillère (2) étant disposée entre le disque abrasif (3) et le disque d'entraînement (4),
- un dispositif de réglage (8) pour produire un mouvement relatif entre la crémaillère (2) et le disque abrasif (3), le dispositif de réglage (8) sollicitant la crémaillère (2) avec un mouvement d'oscillation axiale,
**caractérisé en ce que**
- le disque d'entraînement (4) est réalisé sous forme légèrement conique ou est disposé de manière légèrement inclinée, de sorte que la crémaillère (2) soit sollicitée avec une force axiale dans la direction du dispositif de réglage (8), et
- **en ce que** le dispositif de réglage (8) est réalisé sous forme passive et en tant que dispositif excentrique (8) avec un disque d'excentrique (9) monté de manière excentrée, qui sollicite la crémaillère (2) avec le mouvement d'oscillation axiale.

5. Dispositif selon la revendication 4, **caractérisé en ce que** les axes de rotation (2a, 10) de la crémaillère (2) et du disque d'excentrique (9) sont perpendiculaires l'un à l'autre.

6. Dispositif selon les revendications 4 et 5, **caractérisé en ce que** le côté frontal (11) de la crémaillère (2) s'applique avec un décalage latéral contre le disque d'excentrique (9).
